Europäisches Patentamt

European Patent Office

Office européen des brevets

(11) Veröffentlichungsnummer: **0 494 343 A2**

## EUROPÄISCHE PATENTANMELDUNG

(21) Anmeldenummer: **91115728.7**

(22) Anmeldetag: **17.09.91**

(51) Int. Cl.5: **F16K 24/00**, F16K 31/06, F16K 13/10

(30) Priorität: **05.01.91 DE 4100166**

(43) Veröffentlichungstag der Anmeldung:
**15.07.92 Patentblatt 92/29**

(84) Benannte Vertragsstaaten:
**DE FR GB IT**

(71) Anmelder: **Firma Carl Freudenberg**
**Höhnerweg 2-4**
**W-6940 Weinheim/Bergstrasse(DE)**

(72) Erfinder: **Vogt, Rolf**
**Plankstadter-Strasse 15**
**W-6836 Oftersheim(DE)**

(54) **Druckregulierendes Ent- und Belüftungsventil.**

(57) Druckregulierendes Ent- und Belüftungsventil für einen von einer Wand (10) umschlossenen Raum (9), der abgedichtet ist. Die Wand (10) ist von mindestens einem Spalt (6) durchdrungen, der von einem Magnetfeld überbrückt ist. Eine ferrofluidische Flüssigkeit (7) füllt den Spalt (6) ganz aus und wird durch das Magnetfeld im Spalt (6) gehalten.

Fig. 1

Die Erfindung betrifft ein druckregulierendes Ent- und Belüftungsventil für einen von einer Wand umschlossenen Raum, der nach außen abgedichtet ist.

Solche druckregulierenden Ent- und Belüftungsventile sind allgemein bekannt. So werden beispielsweise federkraftbeaufschlagte Rückschlagventile zur Druckbegrenzung in abgedichteten Räumen genutzt.

Nachteilig an beispielsweise diesen Kugel-Federsystemen ist, daß zur Druckregulierung mehrere Bauteile relativ beweglich zueinander mit geringen Toleranzen in einem Ventilgehäuse angeordnet sind, was eine vergleichsweise hohe Störanfälligkeit bedingt. Außerdem können mit ein und demselben Ventil nicht sowohl Über- als auch Unterdrücke abgebaut werden. Ferner reagieren diese Ventile relativ träge auf Druckdifferenzen, so daß das Einhalten eines Druckes innerhalb geringer Toleranzen nicht möglich ist.

Der Erfindung liegt die Aufgabe zugrunde, ein regulierendes Ent- und Belüftungsventil derart weiterzuentwickeln, daß sich ein teilearmes, einfaches, robustes und preiswert herstellbares Ventil ergibt, das auf sehr geringe Druckdifferenzen sowohl bei Über- als auch bei Unterdruck weitgehend ohne Verzögerung reagiert.

Diese Aufgabe wird erfindungsgemäß bei einem druckregulierenden Ent- und Belüftungsventil der eingangs genannten Art mit den kennzeichnenden Merkmalen von Anspruch 1 gelöst. Auf vorteilhafte Ausgestaltung nehmen die Unteransprüche Bezug.

Das erfindungsgemäße Ent- und Belüftungsventil ist dadurch gekennzeichnet, daß zumindest ein die Wand durchdringender Spalt vorgesehen ist, der von einem Magnetfeld überbrückt ist sowie eine ferrofluidische Flüssigkeit, die den Spalt ganz ausfüllt und durch das Magnetfeld in dem Spalt gehalten wird. Magnetische Flüssigkeitsdichtungen können gegen einen gewissen Differenzdruck abdichten. Durch entsprechende konstruktive Maßnahmen,wie zum Beispiel die Spalthöhe zwischen einem Kern und beispielsweise einem Polschuh eines Magneten, kann die maximale Druckdifferenz, bei der diese Dichtung noch einwandfrei funktioniert, beeinflußt werden. Die erfindungsgemäße Dichtung regelt selbst kleinste Druckdifferenzen im Bereich von 0,02 bar.

Bei einem kritischen Überdruck gibt die magnetische Flüssigkeit einen sehr kleinen Spalt frei und das überdruckbeaufschlagte, angestaute Gas fließt ab. Bei kritischem Unterdruck, beispielsweise durch Abkühlung bedingt, öffnet das Ventil in umgekehrter Richtung und Frischgas aus der Umgebung gelangt ins Gehäuse. Die kritischen Über- bzw. Unterdrücke sind sehr genau justierbar, so daß sich im Gehäuse sehr genau definierte Maximaldrücke ergeben.

Das erfindungsgemäße Ventil hat gegenüber den bekannten Varianten (Kugel-Federsystem) den Vorteil, daß mit lediglich einem Element sehr geringe Druckdifferenzen sowohl bei Über- als auch bei Unterdruck abgebaut werden können. Zur Funktion des Ventils ist folgendes zu bemerken: Das Ventil öffnet nur so lange, bis ein Druckausgleich stattgefunden hat. Anschließend, wenn stationäre Verhältnisse vorliegen, schließt das Ventil, so daß schädliche oder unangenehme Gase im Gehäuse gehalten und nicht an die Umwelt abgegeben werden. Verunreinigungen von außen, die beispielsweise durch die Entlüftungsbohrung ins Innere des Ventils gelangen, können die ferrofluidische Flüssigkeit, die zwischen dem Kern und dem Polschuh aufgebaut ist, nicht passieren. Dies gilt beispielsweise auch für Wasser, das mit der ferrofluidischen Flüssigkeit nicht vermischbar ist.

Ein weiterer Vorteil dieses Ent- und Belüftungsventils besteht darin, daß es leicht gesäubert und neu mit magnetischer Flüssigkeit befüllt werden kann.

Als weiteres Ausführungsbeispiel ist es möglich, auf der von dem abgedichteten Raum abgewandten Seite des Spaltes einen Kondensator vorzusehen, der die entweichenden Gase kondensiert und in einem Behälter sammelt. Das kondensierte Medium kann über eine Leitung in den abgedichteten Raum zurückgeführt werden.

Um höhere Über- bzw. Unterdrücke in einem Gehäuse zu halten, ist es möglich, mehrere Spalte in einer Reihenschaltung hintereinander anzuordnen. Durch die Reihenschaltung läßt sich, ähnlich dem Baukastenprinzip, das Ventil in verschiedenen Anwendungsfällen mit unterschiedlichem Druckniveau einsetzen. Dazu ist bei höheren Druckdifferenzen lediglich ein verlängerter Spalt erforderlich.

Der Spalt kann geradlinig ausgebildet und einerseits durch einen Magneten und andererseits durch ein Eisenstück begrenzt sein. Die Herstellung ist ganz besonders einfach. Der Spalt kann auch in sich ringförmig geschlossen ausgebildet sein.

Auf engem Raum läßt sich so eine große Spaltlänge verwirklichen. Dem Spalt kann eine Labyrinthdichtung in Richtung des abgedichteten Raumes vorgelagert sein. Hierbei kann auf bekannte, in vielen Abmessungen preiswert verfügbare Labyrinthdichtungen zurückgegriffen werden. Obwohl sich die ferrofluidische Flüssigkeit nicht mit der im abgedichteten Raum befindlichen Flüssigkeit vermischt, bietet eine solche Labyrinthdichtung einen zusätzlichen Schutz, so daß ferrofluidische Flüssigkeitsbestandteile nicht aus dem Spalt gerissen werden können und dadurch verloren gehen. Anstelle der Labyrinthdichtung kann beispielsweise auch ein Prallblech vorgesehen sein, das insbesondere bei geradlinigen Spalten einen preiswerten und wirksamen Schutz der Ferrofluiddichtung gewährleistet.

Die Labyrinthdichtung kann mit wenigstens einer in den abzudichtenden Raum mündenden Dränageöffnung versehen sein. Die Dränageöffnung ermöglicht einerseits eine Druckbeaufschlagung der Ferrofluiddichtung mit dem im abgedichteten Raum herrschenden Druck und andererseits ein Zurücklaufen des aufgewirbelten Mediums in den abgedichteten Raum. Auch ein Prallblech, das der Ferrofluiddichtung vorgelagert sein kann, ist zweckmäßigerweise mit Dränageöffnungen versehen.

Gemäß einer vorteilhaften Ausgestaltung ist vorgesehen, daß der Spalt in einem Einsatzstück angeordnet ist und daß das Einsatzstück als gebrauchsfertige Einheit mit der Wand verbindbar ist. Diese Anordnung ist insbesondere im Hinblick auf die wirtschaftliche Herstellung der an das Ventil angrenzenden Wand von Vorteil. Wird das Einsatzstück beispielsweise durch ein Gewinde in die Wand eingeschraubt und durch eine Dichtung gegen diese abgedichtet, sind keine besonderen Anforderungen bezüglich der Maßhaltigkeit des Gehäuses nötig. Die exakte Breite des Spaltes zwischen dem Ringmagneten und dem Magnetkern ist in dem Einsatzstück leichter einstellbar. Wird eine gebrauchsfertige Einheit in ein Gehäuse eingeschraubt, ist es ferner möglich, daß auch vergleichsweise hohe Drücke durch Reihenschaltung hintereinanderliegender Spalte in vergleichsweise dünnwandigen Gehäusen gehalten werden können.

Das Magnetfeld kann durch einen Permanentmagneten gebildet sein, der einerseits einen ringförmigen oder einen geradlinigen Spalt begrenzen kann. Die Magnete sind axial magnetisiert und können an zwei Polschuhen festgelegt sein, die den magnetischen Fluß zum Magnetkern leiten. Diese Ausbildung ist in wirtschaftlicher Hinsicht insbesondere dann besonders vorteilhaft, wenn es sich bei dem Permanentmagneten um einen Stabmagneten handelt, der benachbart zu einer Platte aus magnetisierbarem Werkstoff angeordnet ist und mit dieser einen geradlinigen Spalt bildet.

Gemäß einer weiteren, vorteilhaften Ausgestaltung kann das Magnetfeld durch einen Elektromagneten gebildet sein. Hierbei ist von Vorteil, daß mit Hilfe des Elektromagneten ein veränderliches und gegebenenfalls sehr starkes Magnetfeld erzeugt werden kann und dadurch eine bessere, variablere Anpassung der auf die ferrofluidische Flüssigkeit ausgeübten Haltekraft an die jeweiligen Besonderheiten des Anwendungsfalles, d.h. ein variables Druckhalteniveau.

Der Gegenstand der Erfindung wird nachfolgend anhand der als Anlage beigefügten Zeichnungen, die Ausführungsbeispiele des erfindungsgemäßen, druckregulierenden Ent- und Belüftungsventils zeigen, weiter verdeutlicht. Es zeigen:

Figur 1      ein Ent- und Belüftungsventil mit einem dem Spalt vorgelagerten Prallblech;

Figur 2      ein Ent- und Belüftungsventil ähnlich dem Ventil nach Figur 1, jedoch mit einem Dichtspalt, der der Ferrofluiddichtung vorgelagert ist und einem Aktivkohlefilter, der der Be- und Entlüftungsöffnung innenseitig benachbart zugeordnet ist;

Figur 3      ein Ent- und Belüftungsventil, bei dem zwei Spalte in einer Reihenschaltung hintereinanderliegend angeordnet sind;

Figur 4      ein Ent- und Belüftungsventil, bei dem dem Spalt eine Labyrinthdichtung in Richtung des abgedichteten Raumes vorgelagert ist;

Figur 5      ein Druckverteilungsdiagramm des Ent- und Belüftungsventils.

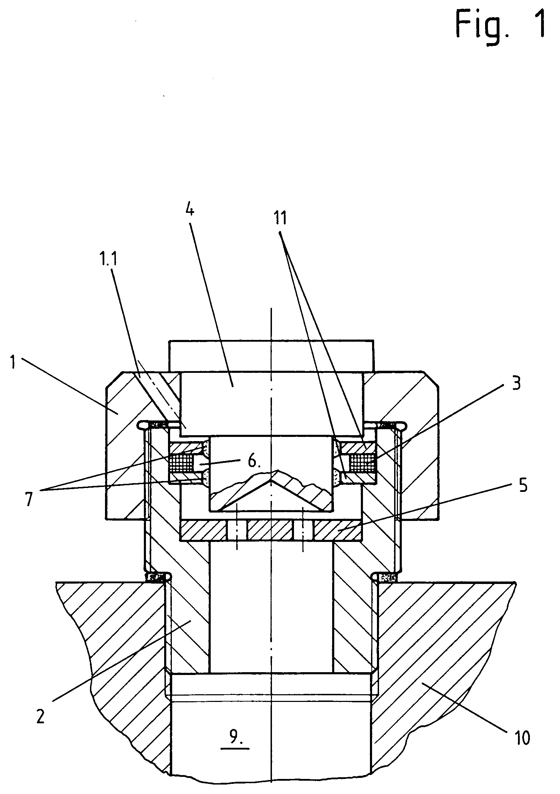

Im wesentlichen bestehen die in den Figuren 1 bis 4 abgebildeten druckregulierenden Ent- und Belüftungsventile aus vier Bauteilen. Das Verschlußgehäuse 1, das zumindest eine Ent- und Belüftungsöffnung 1.1 aufweist, besteht vorzugsweise aus einem nichtmagnetischen Werkstoff, wie zum Beispiel Messing oder einem in wirtschaftlicher Hinsicht wesentlich günstigeren Kunststoff. Das Einsatzstück 2, das beispielsweise mit einem Gewinde versehen und in eine Wand 10 einschraubbar ist, besteht vorzugsweise ebenfalls aus Messing oder einem Kunststoff. Die magnetische Flüssigkeitsdichtung besteht aus einem Ringmagneten 3, der axial magnetisiert ist und zwei Polschuhen 11, welche den magnetischen Fluß zum Magnetkern 4 leiten. Der Magnetkern 4, der die Aufgabe hat, den magnetischen Fluss zu den Polschuhen 11 zu schließen, und so dafür sorgt, daß die ferrofluidische Flüssigkeit 7 in dem Spalt 6 gehalten wird, besteht aus magnetisch leitfähigem Material. Die ferrofluidische Flüssigkeit 7 kann aus einem Öl mit darin befindlichen Metallspänen gebildet sein.

Im Einsatzstück 2 gemäß Figur 1 ist ein Prallblech 5 angeordnet, das den Spalt 6 beispielsweise vor Spritzöl aus dem abgedichteten Raum 9 schützt. Das Verschlußgehäuse 1 und der Magnetkern 4 sind in diesem Fall zweistückig ausgebildet, wodurch beispielsweise ein und dasselbe Verschlußgehäuse 1 auch dann eingesetzt werden kann, wenn sich das Einsatzstück 2 und der Magnetkern 4 aufgrund mehrerer Spalte, die in Reihe hintereinander geschaltet sind, verlängern.

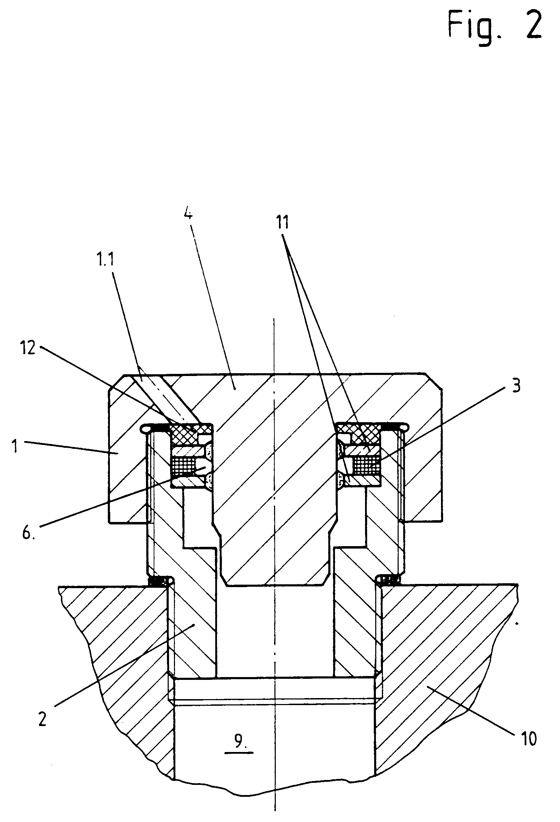

Figur 2 zeigt ein erfindungsgemäßes Ventil ähnlich dem von Figur 1, wobei der Magnetkern 4 und das Verschlußgehäuse 1 einstückig ausgebildet sind. Der Magnetkern 4 fungiert in diesem Fall gleichzeitig als Schutz für die Ferrofluiddichtung.

Diese im wesentlichen nur vier Teile umfassende Einheit bietet sich insbesondere zur Herstellung großer Stückzahlen ein und desselben Ent- und Belüftungsventils an. Außerdem ist in diesem Anwendungsbeispiel ein Aktivkohlefilter 12 vorgesehen, der konzentrisch im Einsatzstück 2 angeordnet und unmittelbar vor der Entlüftungsöffnung 1.1 des Verschlußgehäuses 1 plaziert ist.

Der Aktivkohlefilter ist so gestaltet, daß eine unmittelbare Beaufschlagung mit ferrofluidischer Flüssigkeit ausgeschlossen ist. Des weiteren ist darauf zu achten, daß der Filter aus einem Material besteht, das die ferrofluidische Flüssigkeit nicht aus dem Dichtspalt zwischen dem Polschuh 11 und dem Magnetkern 4 saugt. Der Aktivkohlefilter 12 kann beispielsweise auch durch einen Abstand in axialer Richtung von dem benachbart angeordneten Polschuh 11 getrennt sein. Der Aktivkohlefilter 12 vermindert die Schädlichkeit der durch den Spalt 6 entweichenden Gase, bevor sie durch die Entlüftungsöffnung 1.1 ins Freie gelangen.

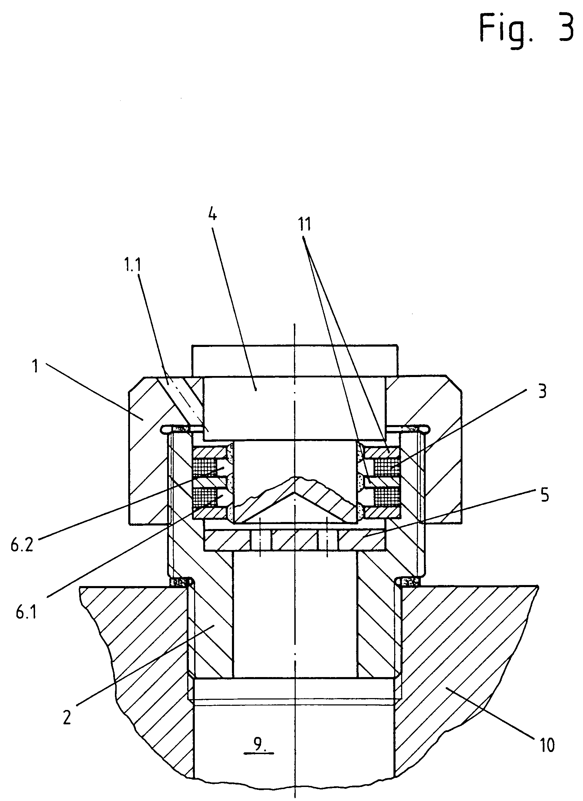

Figur 3 zeigt ein Ent- und Belüftungsventil, das im wesentlichen dem aus Figur 1 entspricht, jedoch zum Halten eines höheren Über- bzw. Unterdruckkes mit zwei Spalten 6.1, 6.2 versehen ist, die in einer Reihenschaltung hintereinanderliegend angeordnet sind. Bei ansonsten weitgehend konstruktiver Gleichheit der das Ventil bildenden Teile brauchen lediglich der Magnetkern 4 und das Einsatzstück 2 in axialer Richtung verlängert zu werden, was in wirtschaftlicher Hinsicht besonders vorteilhaft ist.

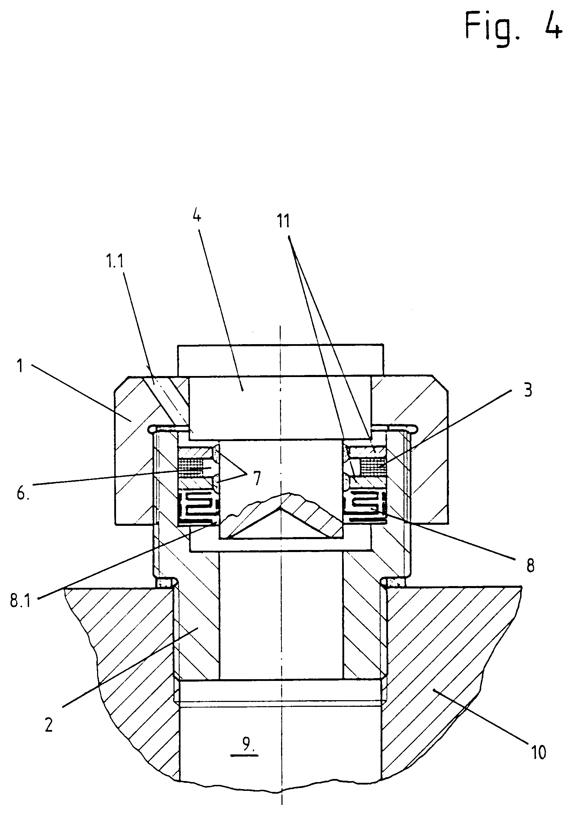

Das in Figur 4 gezeigte Ent- und Belüftungsventil weist in sich ringförmig geschlossen ausgebildete Spalte 6 auf. Zum Schutz der ferrofluiden Flüssigkeit 7 ist eine Labyrinthdichtung 8 vorgesehen, die mit einer in den abzudichtenden Raum 9 mündenden Dränageöffnung 8.1 versehen ist. Die Labyrinthdichtung 8 ist dem Spalt 6 in Richtung des abgedichteten Raumes 9 vorgelagert. Labyrinthdichtungen, die an sich bekannt sind, gibt es in vielen Formen und Größen, so daß sich diese auch bei Großserienfertigung wirtschaftlich verwenden lassen.

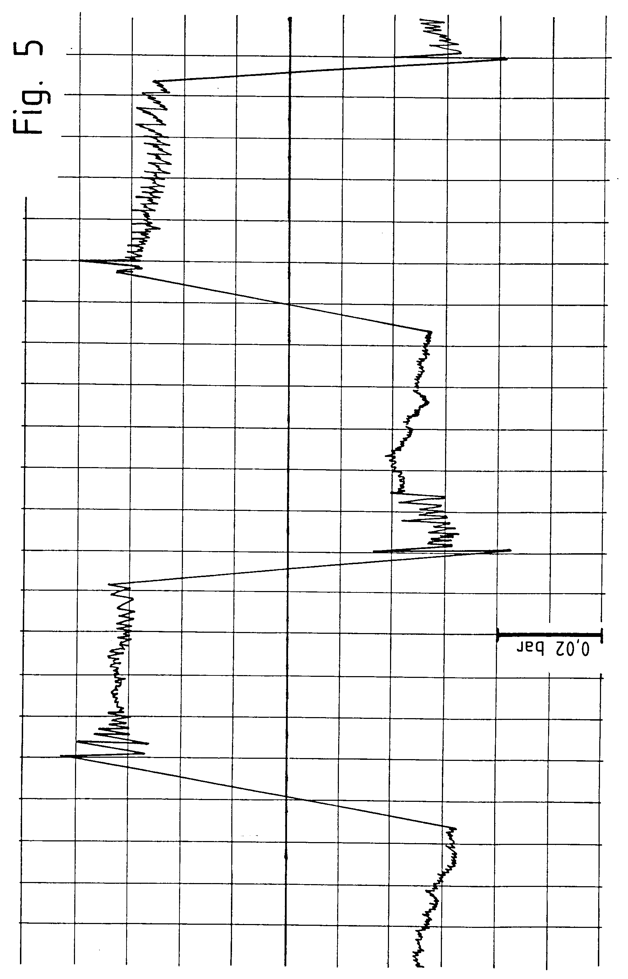

In Figur 5 ist die Funktion des Ent- und Belüftungsventiles anhand einer Druckverteilungskurve dargestellt. Dabei sind Druckänderungen in Abhängigkeit von sich ändernden Temperaturen aufgetragen, die beispielsweise um den Atmosphärendruck pendeln. Zu dem Diagramm wird folgendes ausgeführt:

Mit steigender Temperatur im Inneren des abgedichteten Raumes 9 steigt der Druck bis zu einem genau festgelegten Grenzwert an. Bei weiterer Temperaturerhöhung gibt die ferrofluidische Flüssigkeit einen kleinen Spalt beispielsweise zwischen den Polschuhen 11 und dem Magnetkern 4 frei und läßt den Überdruck durch eine Entlüftungsöffnung 1.1 entweichen. Anschließend füllt die ferrofluidische Flüssigkeit den Spalt 6 wieder vollständig aus und dichtet den Raum 9 nach außen ab. Dieses Prinzip funktioniert in umgekehrter Richtung, also bei steigendem Unterdruck sinngemäß. Die Dichtung dichtet den Raum 9 bis zu einem vorher genau definierten Grenzwert ab und gibt bei steigendem Unterdruck einen Spalt 6 in der Ferrofluiddichtung frei, so daß aus der Umgebung gasförmiges Medium nachströmen kann, bis sich der Grenzwert wieder einstellt und das Ventil schließt. Der Druckausgleich findet in einem genau definierten Rahmen statt und ist auf 0,02 bar genau einstellbar. Das hat den Vorteil, daß mit ein und demselben druckregulierenden Ent- und Belüftungsventil sehr geringe Druckdifferenzen sowohl bei Über- als auch bei Unterdruck abgebaut werden können. Das Ventil öffnet so lange, bis sich der maximal zulässige Druck wieder eingestellt hat. Liegen im Anschluß daran stationäre Verhältnisse vor, schließt das Ventil, so daß schädliche oder unangenehme Gase im abzudichtenden Raum 9 zurückgehalten werden. Das erfindungsgemäße Ventil reagiert sehr rasch auf kleinste Druckdifferenzen, ist einfach im Aufbau, bei Bedarf leicht zu reinigen und sehr genau justierbar.

**Patentansprüche**

1. Druckregulierendes Ent- und Belüftungsventil für einen von einer Wand umschlossenen Raum, der nach außen abgedichtet ist, gekennzeichnet durch zumindest einen die Wand durchdringenden Spalt (6), der von einem Magnetfeld überbrückt ist sowie eine ferrofluidische Flüssigkeit (7), die den Spalt (6) ganz ausfüllt und durch das Magnetfeld in dem Spalt (6) gehalten wird.

2. Ent- und Belüftungsventil nach Anspruch 1, dadurch gekennzeichnet, daß mehrere Spalte (6.1, 6.2) in einer Reihenschaltung hintereinander angeordnet sind.

3. Ent- und Belüftungsventil nach Anspruch 1 oder 2, dadurch gekennzeichnet, daß der Spalt (6) in sich ringförmig geschlossen ist.

4. Ent- und Belüftungsventil nach Anspruch 1 bis 3, dadurch gekennzeichnet, daß dem Spalt (6) eine Labyrinthdichtung (8) in Richtung des abgedichteten Raumes (9) vorgelagert ist.

5. Ent- und Belüftungsventil nach Anspruch 4, dadurch gekennzeichnet, daß die Labyrinthdichtung (8) mit wenigstens einer in den abzudichtenden Raum (9) mündenden Dränageöffnung (8.1) versehen ist.

6. Ent- und Belüftungsventil nach Anspruch 1 bis 5, dadurch gekennzeichnet, daß der Spalt (6) in einem Einsatzstück (2) angeordnet ist und daß das Einsatzstück (2) als gebrauchsfertige Einheit mit der Wand (10) verbindbar ist.

7. Ent- und Belüftungsventil nach Anspruch 1 bis 6, dadurch gekennzeichnet, daß das Magnetfeld durch einen Permanentmagneten gebildet ist.

8. Ent- und Belüftungsventil nach Anspruch 1 bis 6, dadurch gekennzeichnet, daß das Magnetfeld durch einen Elektromagneten gebildet ist.

Fig. 1

Fig. 2

Fig. 3

Fig. 4

Fig. 5

0,02 bar